# EUROPÄISCHE PATENTSCHRIFT

(11) **EP 3 615 711 B1**
(45) Veröffentlichungstag und Bekanntmachung des Hinweises auf die Patenterteilung: **18.01.2023**
(21) Anmeldenummer: 17719241.6
(22) Anmeldetag: 24.04.2017
(51) Int. Cl.: C25B 1/04, C25B 9/23, C25B 15/02, C25B 9/00, C25B 15/08

(54) **VERFAHREN ZUM BETREIBEN EINER WASSERELEKTROLYSEVORRICHTUNG**
METHOD FOR OPERATING A WATER ELECTROLYSIS DEVICE
PROCÉDÉ POUR FAIRE FONCTIONNER UN DISPOSITIF D'ÉLECTROLYSE DE L'EAU

(43) Veröffentlichungstag der Anmeldung: 04.03.2020
(73) Patentinhaber: Hoeller Electrolyzer GmbH, 23966 Wismar (DE)
(72) Erfinder: HÖLLER, Stefan, 23552 Lübeck (DE)
(74) Vertreter: Patentanwälte Vollmann Hemmer Lindfeld Partnerschaft mbB
(86) Internationale Anmeldenummer: PCT/EP2017/059628
(87) Internationale Veröffentlichungsnummer: WO 2018/196947

(56) Entgegenhaltungen:
- EP-A1- 2 623 640
- EP-A1- 2 792 769
- US-A1- 2003 141 200

## Beschreibung

Die Erfindung betrifft ein Verfahren zum Betreiben einer Wasserelektrolysevorrichtung zum Erzeugen von Wasserstoff und Sauerstoff gemäß den im Oberbegriff des Anspruchs 1 angegebenen Merkmalen sowie eine Wasserelektrolysevorrichtung zur Ausführung dieses Verfahrens gemäß den im Oberbegriff des Anspruchs 5 angegebenen Merkmalen.

Aus EP 1 243 671 A1 zählt eine Wasserelektrolysevorrichtung zum Stand der Technik, bei welcher ein PEM-Elektrolyseur in einen Wasserkreislauf eingebunden ist. Das dem PEM-Elektrolyseur zugeführte Wasser wird in Wasserstoff und Sauerstoff aufgespalten, wobei das überschüssige Wasser zusammen mit dem Sauerstoff einem Gasabscheidebehälter zugeführt wird, dessen flüssigkeitsführende Ausgangsleitung einer Kühlvorrichtung und nachfolgend über einen Filter wieder dem PEM-Elektrolyseur zugeführt wird. Das bei der Elektrolyse in Wasserstoff und Sauerstoff aufgespaltene Wasser wird durch demineralisiertes Wasser ersetzt und dem Gasabscheidebehälter zugeführt.

Beim Betrieb dieser Elektrolysevorrichtung werden im PEM-Elektrolyseur Metallionen freigesetzt, welche den Elektrolyseprozess beim erneuten Zuführen des Wassers negativ beeinflussen und den PEM-Elektrolyseur schädigen. Dies kann durch Vorschalten eines Ionenaustauschers verhindert werden, allerdings erfordert dies eine Temperaturabsenkung des zugeführten Wassers, um eine höchstens zulässige Temperatur von ca. 60°C nicht zu überschreiten. Die Absenkung der Wassertemperatur verschlechtert jedoch die Leistung und den Wirkungsgrad des PEM-Elektrolyseurs, der vorzugsweise mit Wasser einer Temperatur zwischen 70° und 80°C oder höher betrieben wird. Bei der aus EP 1 243 671 A1 bekannten Vorrichtung wird eine solche Temperaturabsenkung durch Verzicht eines dem PEM-Elektrolyseur vorgeschalteten Ionenaustauschers ermöglicht, wobei durch ständiges Zuführen von demineralisiertem Wasser dafür Sorge getragen wird, dass der Metallionengehalt des dem PEM-Elektrolyseur zugeführten Wassers einen erträglichen Wert nicht überschreitet.

Aus EP 2 792 769 A1 zählt eine Wasserelektrolysevorrichtung zum Stand der Technik, bei welcher dem PEM-Elektrolyseur im Leitungskreislauf ein Ionenaustauscher vorgeschaltet ist. Um hier einerseits die für den Ionenaustauscher zulässige Temperatur nicht zu überschreiten und um andererseits dem PEM-Elektrolyseur Wasser höherer Temperatur, als das aus dem Ionenaustauscher austretende, zuzuführen, ist dort ein Wärmetauscher vorgesehen, welcher primärseitig das dem Ionenaustauscher zugeführte und sekundärseitig das aus dem Ionenaustauscher abgeführte Wasser im Gegenstrom führt, um diese Temperaturproblematik zu verbessern. Dabei ist allerdings zusätzlich eine Kühlvorrichtung zwischen dem Wärmetauscher und dem Ionenaustauscher erforderlich, um die für den Ionenaustauscher erforderliche Eingangstemperatur zu gewährleisten. Ein Problem dieser Anordnung ist, dass durch den vorgeschalteten Wärmetauscher primär- und sekundärseitig stets dieselben Wassermengen geführt werden müssen, da sie im selben Leitungskreislauf liegen. Das Regulant der Kühlvorrichtung erweist sich in der Praxis als nicht ausreichend, um den gegenläufigen Temperaturerfordernissen Genüge zu tun.

Ausgehend von diesem Stand der Technik liegt der Erfindung die Aufgabe zugrunde, ein Verfahren zum Betreiben einer Wasserelektrolysevorrichtung dahingehend zu verbessern, dass die vorgenannten Probleme vermindert werden, insbesondere der Elektrolyseprozess von der Leistung und vom Wirkungsgrad her verbessert werden kann. Im Weiteren soll eine Wasserelektrolysevorrichtung bereitgestellt werden, mit welcher ein solch verbessertes Verfahren ausführbar ist.

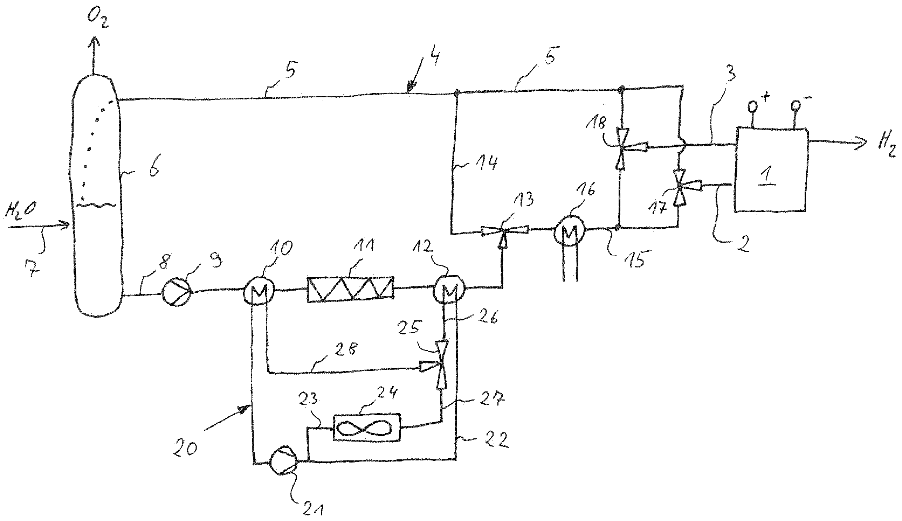

Der verfahrensmäßige Teil dieser Aufgabe wird durch das in Anspruch 1 angegebene Verfahren gelöst, der vorrichtungsmäßige durch eine Elektrolysevorrichtung gemäß Anspruch 5. Vorteilhafte Ausgestaltungen der Erfindung sind in den Unteransprüchen, der nachfolgenden Beschreibung und der Zeichnung angegeben.

Das erfindungsgemäße Verfahren zum Betreiben einer Wasserelektrolysevorrichtung zum Erzeugen von Wasserstoff und Sauerstoff, bei welcher in einem Wasserkreislauf aus einem PEM-Elektrolyseur kommendes Wasser einem ersten Wärmetauscher zur Abkühlung, nachfolgend einem Ionenaustauscher und dann einem zweiten Wärmetauscher zur Erwärmung und wieder dem PEM-Elektrolyseur zugeführt wird, zeichnet sich dadurch aus, dass die Wärmetauscher sekundärseitig Teil eines gemeinsamen Wärmeträgerkreislaufs bilden, wobei der Wärmeträgerkreislauf eine Kühlvorrichtung aufweist, durch welche der Wärmeträgerstrom zur Steuerung und/oder Regelung der Temperatur des dem Ionenaustauscher zugeführten Wassers und/oder der Temperatur des dem PEM-Elektrolyseur zugeführten Wassers wahlweise ganz, teilweise oder gar nicht durchgeleitet wird.

Grundgedanke des erfindungsgemäßen Verfahrens ist es, zunächst einmal auf eine Kühlvorrichtung im Wasserkreislauf des Elektrolyseurs zu verzichten und stattdessen entweder die Temperatur des dem lonenaustauchers zugeführten Wassers oder die Temperatur des dem PEM-Elektrolyseur zugeführten Wassers oder beide Temperaturen zu steuern, vorzugsweise zu regeln, indem der sekundärseitig durch die Wärmetauscher geführte Wärmeträgerstrom je nach Anforderung ganz, teilweise oder gar nicht einer Kühlvorrichtung zugeführt wird. Dabei ist die Kühlvorrichtung vorzugsweise über ein Mischventil parallel zu dem zweiten Wärmetauscher geschaltet, so dass der aus der Kühlvorrichtung austretende Wärmeträgerstrom zunächst dem ersten Wärmetauscher und dann ganz oder teilweise dem zweiten Wärmetauscher bzw. wieder der Kühlvorrichtung zugeführt wird. Mit dieser Anordnung kann unter Einsatz einer entsprechenden Steuer- und Regeleinrichtung entweder die Temperatur des dem PEM-Elektrolyseur zugeführten Wassers oder die Temperatur des dem Wärmeaustauscher zugeführten Wassers in der erforderlichen Weise geregelt werden. Wenn, was gemäß der Erfindung ebenfalls vorgesehen ist, beide dieser Temperaturen geregelt werden sollen, dann wird es erforderlich sein, ein weiteres Regulant (Stellglied) vorzusehen, dies kann beispielsweise die Leistung der Kühlvorrichtung, also die Kühlleistung und/oder die Durchflussmenge durch den Wärmeträgerkreislauf sein, die beispielsweise durch entsprechende Ansteuerung einer drehzahlsteuerbaren Umwälzpumpe variiert werden kann.

Alternativ kann gemäß der Erfindung die Kühlvorrichtung des Wärmeträgerkreislaufs in Durchströmungsrichtung dem ersten Wärmetauscher vorgeschaltet, das heißt in Reihe mit diesem geschaltet sein. Dann wird über ein Mischventil die Durchflussmenge gesteuert, die dem zweiten Wärmetauscher zugeführt wird bzw. welche der Kühlvorrichtung unter Umgehung des zweiten Wärmetauschers zugeführt wird. Bei einer solchen Anordnung sollte die Kühlvorrichtung in ihrer Leistung steuerbar sein.

Grundgedanke des erfindungsgemäßen Verfahrens ist es somit, nicht den Wasserkreislauf direkt zu kühlen, sondern eine Kühlvorrichtung in den Sekundärkreislauf einzubinden, wobei in vorteilhafter Weise beide Wärmetauscher demselben Wärmeträgerkreislauf zugeordnet sind und lediglich durch ganz, teilweise oder nicht Durchleitung des Wärmeträgers durch eine Kühlvorrichtung die Temperatursteuerung bzw. Regelung erfolgt.

Unter PEM-Elektrolyseur im Sinne der vorliegenden Erfindung ist typischerweise ein Stapel von PEM-Elektrolyseurzellen zu verstehen, wie dies zum Stand der Technik zählt. Es kann sich dabei gegebenenfalls auch um eine Vielzahl von in anderer Form parallel geschalteter PEM-Elektrolysezellen handeln. Auch müssen der erste und zweite Wärmetauscher nicht notwendig aus einem einzigen Wärmetauscher bestehen, auch hierbei kann es sich um ein oder mehrere parallel und/oder in Reihe geschaltete Einzelwärmetauscher handeln. Dies gilt in analoger Weise für die Kühlvorrichtung und den Ionenaustauscher, wobei die Kühlvorrichtung typischerweise einen Wärmetauscher aufweist, dessen Primärseite im Wärmeträgerkreislauf liegt und dessen Sekundärseite von einem Kühlmedium durchströmbar ist, beispielsweise Luft oder Kühlflüssigkeit aus einem Kühlaggregat.

In der vorliegenden Anmeldung werden durchgängig die Begriffe Wasserkreislauf bzw. Leitungskreislauf einerseits und Wärmeträgerkreislauf andererseits benutzt. Mit Wasserkreislauf bzw. Leitungskreislauf wird der Primärkreislauf bezeichnet, in dem der PEM-Elektrolyseur und der Ionenaustauscher liegen, mit Wärmeträgerkreislauf der Sekundärkreislauf, welcher sekundärseitig durch die vor und hinter dem Ionenaustauscher angeordneten Wärmetauscher führt, der jedoch in gleicher Weise mit Wasser als Wärmeträgermedium betrieben werden kann. Typischerweise wird hier kein demineralisiertes oder destilliertes Wasser verwendet, sondern übliches Leitungswasser, gegebenenfalls unter Zumischung von Glycerin oder auch anderen Zusätzen.

Um die Lebensdauer des PEM-Elektrolyseurs, der typischerweise als Stack ausgebildet ist, zu erhöhen und somit auch langfristig eine hohe Leistung zu gewährleisten, ist gemäß einer Weiterbildung der Erfindung vorgesehen, die Durchströmungsrichtung durch den PEM-Elektrolyseur periodisch umzukehren, wobei es gemäß der Erfindung nicht zwingend darauf ankommt, stets gleich lange Durchströmungsintervalle in jeder Richtung zu erzielen, sondern eine einigermaßen gleichmäßige Verteilung über die Betriebsdauer. Periodisch im Sinne der Erfindung ist also nicht streng mathematisch, sondern im Sinne von abwechselnd zu verstehen. Dabei ist es bevorzugt so, dass die Umsteuerung nicht während des Betriebs, sondern nach dem Herunterfahren der Elektrolysevorrichtung bzw. vor dem Hochfahren erfolgt, wenn diese ohnehin stillgestanden hat. Wenn die Elektrolysevorrichtung allerdings ständig läuft, dann kann eine solche Umsteuerung auch gegebenenfalls während des Betriebs erfolgen. Diese Maßnahme des Wechsels der Durchströmungsrichtung durch den PEM-Elektrolyseur kann darüber hinaus auch unabhängig von dem vorgenannten Verfahren gemäß Anspruch 1 angewendet werden, also auch beim Betrieb von Elektrolysevorrichtungen nach dem Stand der Technik, wie sie einleitend beispielhaft genannt sind.

Gemäß einer vorteilhaften Weiterbildung des erfindungsgemäßen Verfahrens ist es vorgesehen, beim Anfahren der Wasserelektrolysevorrichtung den Wasserkreislauf über eine Bypassleitung am PEM-Elektrolyseur vorbei zu führen. Auch diese Maßnahme kann unabhängig von den in Anspruch 1 und 2 angegebenen Verfahren erfolgen. Diese Maßnahme trägt ebenfalls zur Langlebigkeit des PEM-Elektrolyseurs bei, da Ionenaustauscher typischerweise die Eigenschaft haben, wenn sie nicht durchströmt sind, sondern wie bei heruntergefahrener Elektrolysevorrichtung, das darin befindliche Medium steht, Metallionen an das Wasser abzugeben, die dann beim nachfolgenden Anfahren der Vorrichtung in den PEM-Elektrolyseur gelangen und diesen schädigen. Durch die Bypassführung während des Anfahrens kann dies wirksam verhindert werden. Die dort im Wasserkreislauf befindlichen Metallionen werden beim erneuten Durchströmen durch den Ionenaustauscher dann entfernt.

Um die Leistung des PEM-Elektrolyseurs beim Anfahren der Elektrolysevorrichtung möglichst schnell auf ein hohes Niveau zu bringen, ist gemäß einer Weiterbildung der Erfindung vorgesehen, das dem PEM-Elektrolyseur zugeführte Wasser mittels einer Heizvorrichtung vorzuwärmen. Dies wird typischerweise mittels einer elektrischen Heizung erfolgen, die das beim Anfahren der Vorrichtung kalte Wasser nach Art eines Durchlauferhitzers erwärmt. Diese Maßnahme ergänzt die erfindungsgemäße Regelung in idealer Weise, die bei zu geringer Temperatur im Wasserkreislauf anfänglich noch nicht in der gewünschten Weise funktioniert. Die Heizvorrichtung muss nicht notwendigerweise im Primärkreislauf angeordnet sein, sondern kann auch im Wärmeträgerkreislauf vorgesehen sein, beispielsweise in Durchflussrichtung vor dem weiteren Wärmetauscher, der ohnehin zur Erwärmung des dem PEM-Elektrolyseur zugeführten Wassers dient.

Die erfindungsgemäße Wasserelektrolysevorrichtung zur Erzeugung von Wasserstoff und Sauerstoff aus Wasser weist einen Leitungskreislauf für das destillierte, zumindest demineralisierte Wasser auf, in dem nacheinander ein PEM-Elektrolyseur, ein erster Wärmetauscher, ein Ionenaustauscher und ein weiterer Wärmetauscher angeordnet sind, wobei der Ausgang des weiteren Wärmetauschers mit dem PEM-Elektrolyseur leitungsverbunden ist. Der wasserführende Ausgang des PEM-Elektrolyseurs ist typischerweise der sauerstoffführende Ausgang, aus dem Wasser und Sauerstoff gleichzeitig austreten, die nachfolgend getrennt werden, wobei das Wasser im Leitungskreislauf geführt wird. Gemäß der Erfindung sind sowohl der erste als auch der weitere Wärmetauscher sekundärseitig in einen gemeinsamen Wärmeträgerkreislauf eingegliedert, wobei diesem Wärmeträgerkreislauf eine Kühlvorrichtung zugeordnet ist, die über eine steuerbare Armatur in den Wärmeträgerkreislauf variabel eingliederbar ist. Vorzugsweise ist dabei auch die Kühlvorrichtung selbst in ihrer Kühlleistung steuerbar, alternativ oder zusätzlich kann eine Steuerung über die Durchflussgeschwindigkeit im Wärmeträgerkreislauf vorgesehen sein.

Grundgedanke der erfindungsgemäßen Wasserelektrolysevorrichtung ist es, unter Verzicht auf eine Kühlvorrichtung im Leitungskreislauf die Wärmetauscher vor und hinter dem Ionenaustauscher einem gemeinsamen sekundärseitigen Wärmeträgerkreislauf zuzuordnen und in diesem Wärmeträgerkreislauf eine Kühlvorrichtung einzugliedern, welche über eine steuerbare Armatur, vorzugsweise stufenlos, in den Wärmeträgerkreislauf ganz, teilweise oder gar nicht eingebunden werden kann.

Gemäß einer Weiterbildung der Erfindung weist die Wasserelektrolysevorrichtung eine Steuer- und Regeleinrichtung auf, welche die Armatur oder die Kühlvorrichtung oder beide zum Zwecke der Temperaturregelung des dem Ionenaustauscher oder dem PEM-Elektrolyseur oder beiden zugeführten Wassers steuert. Bevorzugt ist die Regeleinrichtung zur Temperaturregelung des dem PEM-Elektrolyseur zugeführten Wassers ausgelegt, da diese Temperatur für die Leistung der gesamten Vorrichtung ausschlaggebend ist.

Da in dem Prozess typischerweise mehr Wärme im Leitungskreislauf abzugeben ist als zur Erwärmung des dem PEM-Elektrolyseur zuzuführenden Wassers erforderlich ist, kann gemäß der Erfindung auch eine stufenweise Regelung erfolgen, der Gestalt, dass die dem PEM-Elektrolyseur zugeführte Wassertemperatur primär geregelt und die dem Ionenaustauscher zugeführte Wassertemperatur lediglich hinsichtlich einer Grenztemperatur geregelt wird, wobei diese Grenztemperatur beispielsweise maximal 60°C beträgt.

Gemäß einer vorteilhaften Weiterbildung der Erfindung ist die Armatur ein Mischventil (auch Mischer genannt), wie dies beispielsweise aus der Heizungstechnik zum Stand der Technik zählt. Ein solches Mischventil kann mittels eines Stellmotors gesteuert und kostengünstig bereitgestellt werden. Da es sich um den (sekundärseitigen) Wärmeträgerkreislauf handelt, kann hier eine einfache erprobte und kostengünstige Armatur aus der Heizungstechnik Verwendung finden.

Gemäß einer vorteilhaften Weiterbildung der Erfindung ist dem Wärmeträgerkreislauf eine drehzahlsteuerbare Umwälzpumpe angeordnet, deren Drehzahl von der Steuer- und Regeleinrichtung gesteuert ist. Derartige typischerweise frequenzumrichtergesteuerte Umwälzpumpen sind ebenfalls aus der Heizungstechnik kostengünstig verfügbar und können in weiten Leistungsbereichen arbeiten. Die Verwendung einer solchen Umwälzpumpe ist nicht nur sinnvoll, wenn der Förderstrom als weitere Stellgröße für eine Regelung verwendet werden soll, sondern auch wenn dieses Erfordernis nicht gegeben ist, um den Wärmeträgerkreislauf energetisch günstig betreiben zu können.

Vorteilhaft ist die Kühlvorrichtung parallel zum weiteren Wärmetauscher, also dem Wärmetauscher zwischen Ionenaustauscher und PEM-Elektrolyseur geschaltet, so dass der aus der Kühlvorrichtung austretende Wärmeträgerstrom zunächst dem ersten Wärmetauscher zugeführt wird, welcher zum Herunterkühlen des in dem Ionenaustauscher eintretenden Wassers vorgesehen ist. Die Armatur, insbesondere das Mischventil, kann dann entweder in die Verzweigungsleitung eingegliedert werden, welche vom ersten Wärmetauscher kommt und zum weiteren Wärmetauscher oder zur Kühlvorrichtung führt oder aber bevorzugt im Mündungsbereich dieser Leitungen, das heißt dort, wo die Leitung vom weiteren Wärmetauscher, die von der Kühlvorrichtung kommende Leitung und die zum ersten Wärmetauscher führende Leitung aufeinander stoßen. Es versteht sich, dass die Bezeichnungen sich auf die bestimmungsgemäße Durchströmungsrichtung beziehen. Alternativ kann die Kühlvorrichtung in der zum ersten Wärmetauscher führenden Leitung des Wärmeträgerkreislaufs eingegliedert sein, vorzugsweise handelt es sich dann um eine in ihrer Leistung steuerbare Kühlvorrichtung. Mit dem Mischventil wird dann gesteuert, welche Anteile des Wärmeträgerstroms durch den weiteren Wärmetauscher und welcher an diesem vorbeigeführt wird.

Um beim Anfahren der Elektrolysevorrichtung möglichst schnell auf eine hohe Leistung, das heißt elektrische Aufnahmeleistung des PEM-Elektrolyseurs und damit eine möglichst hohe erzeugte Gasmenge zu kommen, kann gemäß der Erfindung vorteilhaft eine Heizvorrichtung im Leitungskreislauf zwischen Ionenaustauscher und PEM-Elektrolyseur vorgesehen sein. Zweckmäßigerweise ist diese Heizvorrichtung hinter dem weiteren Wärmetauscher und vor dem PEM-Elektrolyseur angeordnet. Alternativ kann eine solche Heizvorrichtung im Wärmeträgerkreislauf vorgesehen sein, und zwar in Durchflussrichtung dem weiteren Wärmetauscher sekundärseitig vorgeschaltet. Die Heizvorrichtung muss nicht notwendigerweise eine elektrische Heizung sein, es kann hier auch ein Wärmetauscher vorgesehen sein, dessen andere Seite beispielsweise die Abwärme von einem Verbrennungsmotor führt.

Gemäß einer vorteilhaften Weiterbildung der Erfindung ist im Leitungskreislauf parallel zum PEM-Elektrolyseur eine Bypassleitung vorgesehen, die mittels eines Ventils absperrbar ist. Diese Bypassleitung kann auch durch ein Ventil selbst gebildet werden, wie weiter unten noch ausgeführt wird. Eine solche Bypassleitung ist zum Anfahren der Elektrolysevorrichtung vorteilhaft, um den Wasserkreislauf am PEM-Elektrolyseur vorbeizuführen, um beispielsweise das im Ionenaustauscher stehende Wasser, welches mit Metallionen angereichert sein kann, nicht durch den Elektrolyseur durchzuleiten, sondern dieses erst dann in den Leitungskreislauf einzubinden, wenn sichergestellt ist, dass das dem PEM-Elektrolyseur zugeführte Wasser in ausreichendem Masse frei von Metallionen ist, das heißt der Ionenaustauscher wirksam arbeitet.

Um, wie eingangs beschrieben, eine Richtungsumkehr der Durchströmung durch den PEM-Elektrolyseur innerhalb des Leitungskreislaufes zu ermöglichen, ist gemäß einer Weiterbildung der Erfindung eine Ventilanordnung vorgesehen, mit der dieses realisierbar ist.

Vorteilhaft kann dies durch das Vorsehen von zwei 3/2-Wegeventilen erfolgen, wobei eines der Ventile mit dem einen Wasseranschluss des PEM-Elektrolyseurs sowie der zuführenden und der abführenden Leitung des Leitungskreislaufes verbunden ist und das andere Ventil mit dem anderen Leitungsanschluss des PEM-Elektrolyseurs sowie ebenfalls mit der zuführenden und abführenden Leitung des Leitungskreislaufes verbunden ist. Derartige 3/2-Wegeventile sind kostengünstig am Markt verfügbar, auch in den hier für den Leitungskreislauf erforderlichen speziellen Materialanforderungen. Die mit dem Wasserkreislauf in Kontakt stehenden Ventilteile sind beispielsweise mit Teflon beschichtet oder titanbeschichtet oder bestehen daraus.

Statt zweier 3/2-Wegeventile kann eine Anbindung des PEM-Elektrolyseurs an den Leitungskreislauf auch in vorteilhafter Weise durch ein 4/2-Wegeventil erfolgen, wobei die beiden Schaltstellungen den beiden Durchströmungsrichtungen entsprechen. Wenn anstelle des 4/2-Wegeventils, was vorteilhaft ist, ein 4/3-Wegeventil eingesetzt wird, welches in der dritten Schaltstellung die zuführende und abführende Leitung des Leitungskreislaufes miteinander verbindet, dann kann durch ein einziges Ventil sowohl die Richtungsumkehr der Durchströmung durch den PEM-Elektrolyseur als auch die Bypassfunktion für das Anfahren der Elektrolysevorrichtung mit nur einem Ventil realisiert werden, was vorteilhaft ist.

Vorteilhaft weist die erfindungsgemäße Elektrolysevorrichtung gemäß einer Weiterbildung eine Anfahrsteuerung auf, welche während der Anfahrphase dem Leitungskreislauf durch einen Bypass unter Umgehung des PEM-Elektrolyseurs führt. Diese Anfahrsteuerung kann Teil der Steuer- und Regeleinrichtung sein, sie kann jedoch auch unabhängig davon realisiert sein und steuert in einfachster Form das Absperrventil während der Anfahrphase öffnend an. Diese Anfahrsteuerung kann bei Verwendung eines 4/3-Wegeventils wie vorbeschrieben dazu ausgebildet sein, die dritte, den Bypass bildende Schaltstellung, des Ventils anzusteuern.

Vorteilhaft weist die Elektrolysevorrichtung eine Umkehrsteuerung auf, welche in zeitlichen Abständen die dem PEM-Elektrolyseur zugeordneten Ventile umsteuert, um eine Umkehr der Durchströmungsrichtung zu erzielen. Diese Umkehrsteuerung kann ebenfalls Teil der Steuer- und Regeleinrichtung oder gesondert ausgebildet sein.

Die Erfindung ist nachfolgend anhand eines Ausführungsbeispiels näher erläutert. Die einzige Figur zeigt in stark vereinfachter Darstellung ein Schaltbild einer Elektrolysevorrichtung, bei dem die für die vorliegende Erfindung nicht wesentlichen Komponenten nicht dargestellt sind.

Die dargestellte Wasserelektrolysevorrichtung weist einen PEM-Elektrolyseur 1 auf, der in üblicher Form als Stack ausgebildet ist und einen ersten Leitungsanschluss 2 sowie einen zweiten Leitungsanschluss 3 aufweist, mit denen der Stack 1 in einen Leitungskreislauf 4 eingebunden ist, welcher eine vom PEM-Elektrolyseur 1 abführende Leitung 5 aufweist, in welcher das aus dem PEM-Elektrolyseur 1 austretende Wasser zusammen mit dem darin erzeugten Sauerstoff einen Behälter 6 zugeführt wird, welcher einerseits zur Abscheidung des Sauerstoffs und andererseits zur Speisung des Elektrolyseurs 1 mit Wasser dient. Dieser Behälter 6 ist somit auch ein Vorratsbehälter. Das durch Elektrolyse aus dem Leitungskreislauf 4 über den Elektrolyseur 1 entfernte Wasser wird über eine Leitung 7 dem Behälter 6 zugeführt. Es handelt sich hierbei um demineralisiertes oder destilliertes Wasser. Der wasserführende Ausgang 8 des Behälters 6 ist über eine Umwälzpumpe 9 mit einem ersten Wärmetauscher 10 leitungsverbunden, dessen Ausgang mit dem Eingang eines Ionenaustauschers 11 leitungsverbunden ist, dessen Ausgang mit einem weiteren, hier zweiten Wärmetauscher 12 verbunden ist, dessen Ausgang über ein 3/2-Wegeventil 13 entweder mit einer Bypassleitung 14 oder mit einer zum PEM-Elektrolyseur führenden Leitung 15 verbunden ist, in der eine elektrische Heizung 16 eingegliedert ist.

Die abführende Leitung 5 und die zuführende Leitung 15 sind jeweils über ein 3/2-Wegeventil mit dem PEM-Elektrolyseur 1 verbunden, und zwar über ein erstes 3/2-Wegeventil 17, welches diese Leitungen mit dem ersten Anschluss 2 des Elektrolyseurs 1 verbindet sowie ein zweites 3/2-Wegeventil 18, welches diese Leitungen mit dem zweiten Anschluss 3 des PEM-Elektrolyseurs verbindet.

Im normalen Betrieb wird das Wasser im Leitungskreislauf 4 geführt, in dem es austretend aus dem Behälter 6 zunächst zur Umwälzpumpe 9 und von dort durch die Primärseite des ersten Wärmetauschers 10 geleitet wird. In diesem Wärmetauscher 10 wird das Wasser auf eine Temperatur heruntergekühlt (beispielsweise unter 60°C), um sicherzustellen, dass eine höchst zulässige Betriebstemperatur des nachfolgenden Ionenaustauschers 11 nicht überschritten wird. Nach Austritt aus dem Ionenaustauscher 11 wird das Wasser dem zweiten Wärmetauscher 12 primärseitig zugeführt, in welchem dieses auf eine Temperatur von beispielsweise 70 °C bis 80 °C erwärmt wird, um dann dem PEM-Elektrolyseur 1 zugeführt zu werden, sei es über den ersten Anschluss 2 oder bei Umkehr der Durchströmungsrichtung über den zweiten Anschluss 3. Dabei ist die Temperatur, mit der der zweite Wärmetauscher 12 das Wasser aufheizt so gewählt, dass der nachfolgende Elektrolyseprozess im Elektrolyseur 1 mit hohem Wirkungsrad bei hoher Leistung abläuft. Das aus dem Elektrolyseur 1 zusammen mit dem Sauerstoff austretende Wasser wird über den zweiten Anschluss 3 bzw. bei Strömungsumkehr über den ersten Anschluss 2 in die abführende Leitung 5 dem Behälter 6 zugeführt, wo eine Gasabscheidung erfolgt und sich wasserseitig der Kreislauf 4 schließt.

Die Wärmetauscher 10 und 12 sind sekundärseitig einem gemeinsamen Wärmeträgerkreislauf 20 zugeordnet, der durch eine drehzahlsteuerbare Umwälzpumpe 21 das aus dem ersten Wärmetauscher 10 sekundärseitig austretende Wärmeträgermedium, typischerweise Wasser mit Zusatzstoff, über eine Leitung 22 dem sekundärseitigen Eingang des zweiten Wärmetauschers 12 sowie über eine Leitung 23 einer Kühlvorrichtung 24 zuführt, die parallel zum zweiten Wärmetauscher 12 angeordnet und über ein Mischventil 25 in den Wärmeträgerkreislauf eingebunden ist. Das Mischventil vereint eine vom zweiten Wärmetauscher 12 sekundärseitig kommende Leitung 26 mit einer von der Kühlvorrichtung 24 kommenden Leitung 27 in eine zum ersten Wärmetauscher 10 führende Leitung 28. In einer Endstellung des Mischventils 25 ist die Kühlvorrichtung 24 nicht in den Wärmeträgerkreislauf 20 eingebunden, dann sind die Sekundärseiten der Wärmetauscher 10 und 12 über die Leitungen 26 und 28 miteinander leitungsverbunden, die Umwälzung erfolgt über die Pumpe 21 und die daran anschließende Leitung 22. Durch Ändern der Stellung des Mischventils aus dieser ersten Endstellung in eine zweite Endstellung wird die aus dem zweiten Wärmetauscher 12 kommende Leitung 26 gegenüber der zum ersten Wärmetauscher 10 führenden Leitung 28 abgesperrt und die von der Kühlvorrichtung 24 kommende Leitung 27 mit der Leitung 28 verbunden. Diese Endstellung ist eher theoretischer Natur, da die Leitung 26 in der Praxis nicht vollständig geschlossen wird. Je nachdem wie weit der über die Leitung 27 aus der Kühlvorrichtung 24 austretende Wärmeträgerstrom freigegeben, das heißt über die Leitung 28 zum ersten Wärmetauscher 10 geleitet wird, wird bestimmt, wie viel Wärme aus dem Wärmeträgerkreislauf 20 abgeführt wird.

Es ist eine in der Figur nicht dargestellte Steuer- und Regeleinrichtung vorgesehen, welche dafür sorgt, dass die Stellung des Mischventils 25 so angesteuert wird, dass das dem PEM-Elektrolyseur 1 zugeführte Wasser eine vorbestimmte Temperatur von beispielsweise 80°C aufweist. Diese Temperatur ist entscheidend für die Leistung des PEM-Elektrolyseurs 1 und somit auch der gesamten Elektrolysevorrichtung. Grundsätzlich kann durch Ansteuerung des Mischventils 25 auch die dem Ionenaustauscher 10 zugeführte Wassertemperatur geregelt werden. Da es hier jedoch nicht auf die Einhaltung einer genauen Temperatur ankommt, sondern lediglich sicher zu stellen ist, dass die Eingangstemperatur unter beispielsweise 60°C liegt, wird hier eine sekundäre Regelung überlagert, die entweder durch Drehzahlansteuerung der Umwälzpumpe 21 oder durch Steuerung der Leistung der Kühlvorrichtung 24 erfolgt.

Diese Steuer- und Regeleinrichtung sorgt im Weiteren dafür, dass beim Anfahren der Elektrolysevorrichtung, also dann, wenn das im Kreislauf 4 befindliche Wasser noch nicht die gewünschte Betriebstemperatur hat, dieses über die elektrische Heizung 16 vorgewärmt wird. Bevor eine solche Vorwärmung erfolgt, wird jedoch über eine Anfahrsteuerung das 3/2-Wegeventil derart umsteuert, dass der PEM-Elektrolyseur 1 durch die Bypassleitung 14 überbrückt ist, das heißt, dass das aus dem Ionenaustauscher 11 austretende und durch den zweiten Wärmetauscher 12 geführte Wasser zunächst nicht dem PEM-Elektrolyseur 1, sondern der rückführenden Leitung 5 und somit dem Behälter 6 zugeführt wird. Diese Ansteuerung erfolgt so lange, bis sichergestellt ist, dass das gesamte im Ionenaustauscher befindliche Wasser, welches dort befindlich war, in die rückführende Leitung 5 gelangt ist. Erst dann wird das Ventil 13 umgesteuert, so dass das im Wasserkreislauf 4 geführte Wasser der Heizung 16 zugeführt und somit vorgewärmt in den PEM-Elektrolyseur 1 gelangt.

Weiterhin sorgt die Steuer- und Regeleinrichtung dafür, dass die 3/2-Wegeventile 17 und 18, welche die Durchströmungsrichtung durch den PEM-Elektrolyseur 1 bestimmen, in zeitlichen Abständen umgesteuert werden. In einer ersten Stellung verbindet das 3/2-Wegeventil 17 die zuführende Leitung 15 mit dem ersten Leitungsanschluss 2 des PEM-Elektrolyseurs 1, wobei der Leitungsanschluss zur abführenden Leitung 5 gesperrt ist, in analoger Weise verbindet das zweite 3/2-Wegeventil den zweiten Leitungsanschluss 3 des PEM-Elektrolyseurs 1 mit der abführenden Leitung 5 wobei die Leitungsverbindung zur zuführenden Leitung 15 gesperrt ist. Nach Umsteuern beider Ventile 17, 18, was zeitgleich erfolgen sollte, verbindet das 3/2-Wegeventil 17 den ersten Leitungsanschluss 2 des PEM-Elektrolyseurs 1 mit der abführenden Leitung 5 und sperrt die zuführende Leitung 15, wohingegen das zweite 3/2-Wegeventil den zweiten Leitungsanschluss 3 des PEM-Elektrolyseurs 1 mit der zuführenden Leitung 15 verbindet und die Leitungsverbindung zur abführenden Leitung 5 sperrt. Damit wird der PEM-Elektrolyseur 1 in umgekehrter Richtung durchströmt.

Statt die Kühlvorrichtung 24 in die Leitung 23, 27, also parallel zum zweiten Wärmetauscher 12 anzuordnen, könnte diese in der Leitung 28 angeordnet sein, wobei es sich dann vorzugsweise um eine in ihrer Kühlleistung steuerbare Kühlvorrichtung handeln sollte. Die zum zweiten Wärmetauscher 12 parallel liegende Leitung 23, 27 würde so erhalten bleiben, über das Mischventil 25 würde dann der dem zweiten Wärmetauscher 12 zugeführte Wärmeträgerstrom und der über die Leitung 23, 27 parallel vorbeigeführte gesteuert.

Im vorstehend beschriebenen Ausführungsbeispiel ist die elektrische Heizung in der zum PEM-Elektrolyseur 1 führenden Leitung 15 angeordnet. Alternativ kann eine solche elektrische Heizung auch im Wärmeträgerkreislauf angeordnet sein, typischerweise in Durchflussrichtung vor dem zweiten Wärmetauscher 12, also in der Leitung 22. Eine solche Anordnung hat den Vorteil, dass die Heizung nicht speziell an die für den Primärkreislauf erforderlichen Anforderungen angepasst werden muss, sondern dass auch insoweit kostengünstige Komponenten aus der Heizungs- oder anderer Technik Verwendung finden könnten.

### Bezugszeichenliste

- 1: PEM-Elektrolyseur
- 2: erster Anschluss
- 3: zweiter Anschluss
- 4: Leitungskreislauf/Wasserkreislauf
- 5: abführende Leitung
- 6: Behälter
- 7: wasserzuführende Leitung
- 8: Leitungsausgang von 6
- 9: Umwälzpumpe für Leitungskreislauf
- 10: erster Wärmetauscher
- 11: Ionenaustauscher
- 12: zweiter Wärmetauscher
- 13: 3/2-Wegeventilzur Bypassleitung
- 14: Bypassleitung
- 15: zuführende Leitung
- 16: elektrische Heizung
- 17: 3/2-Wegeventil
- 18: 3/2-Wegeventil
- 20: Wärmeträgerkreiskauf
- 21: Umwälzpumpe für den Wärmeträgerkreislauf
- 22: Leitung zum zweiten Wärmetauscher 12
- 23: Leitung zur Kühlvorrichtung
- 24: Kühlvorrichtung
- 25: Mischventil
- 26: Leitung vom zweiten Wärmetauscher 12 zum Mischventil
- 27: Leitung von der Kühlvorrichtung zum Mischventil
- 28: Leitung vom Mischventil zum ersten Wärmetauscher 10

## Patentansprüche

1. Verfahren zum Betreiben einer Wasserelektrolysevorrichtung zum Erzeugen von Wasserstoff und Sauerstoff, bei welcher in einem Wasserkreislauf (4) aus einem PEM-Elektrolyseur (1) kommendes Wasser einem ersten Wärmetauscher (10) zur Abkühlung, nachfolgend einem Ionenaustauscher (11), dann einem zweiten Wärmetauscher (12) zur Erwärmung und wieder dem PEM-Elektrolyseur (1) zugeführt wird, **dadurch gekennzeichnet, dass** die Wärmetauscher (10, 12) sekundärseitig Teil eines gemeinsamen Wärmeträgerkreislaufs (20) bilden, dass der Wärmeträgerkreislauf (20) eine Kühlvorrichtung (24) aufweist, durch welche der Wärmeträgerstrom zur Steuerung und/oder Regelung der Temperatur des dem Ionenaustauscher (11) und/oder dem PEM-Elektrolyseur (1) zugeführten Wassers wahlweise ganz, teilweise oder gar nicht durchgeleitet wird.

2. Verfahren nach Anspruch 1, bei dem ein PEM-Elektrolyseur (1) eingesetzt wird, **dadurch gekennzeichnet, dass** die Durchströmungsrichtung durch den PEM-Elektrolyseur (1) periodisch umgekehrt wird, vorzugsweise jeweils nach dem Herunterfahren der Elektrolysevorrichtung.

3. Verfahren nach Anspruch 1 oder 2, **dadurch gekennzeichnet, dass** beim Anfahren der Wasserelektrolysevorrichtung der Wasserkreislauf (4) über eine Bypassleitung (14) am PEM-Elektrolyseur (1) vorbei geführt wird.

4. Verfahren nach einem der vorhergehenden Ansprüche, **dadurch gekennzeichnet, dass** beim Anfahren der Wasserelektrolysevorrichtung das dem PEM-Elektrolyseur (1) zugeführte Wasser mittels einer Heizvorrichtung (16) vorgewärmt wird.

5. Wasserelektrolysevorrichtung zur Erzeugung von Wasserstoff und Sauerstoff aus Wasser, bei der in einem Leitungskreislauf (4) nacheinander ein PEM-Elektrolyseur (1), ein erster Wärmetauscher (10), ein Ionenaustauscher (11) und ein weiterer Wärmetauscher (12), dessen Ausgang mit dem PEM-Elektrolyseur (1) leitungsverbunden ist, angeordnet sind, **dadurch gekennzeichnet, dass** die Wärmetauscher (10, 12) sekundärseitig in einen gemeinsamen Wärmeträgerkreislauf (20) eingegliedert sind, und dass dem Wärmeträgerkreislauf eine vorzugsweise hinsichtlich der Kühlleistung steuerbare Kühlvorrichtung (24) zugeordnet ist, die über eine steuerbare Armatur (25) in den Wärmeträgerkreislauf (20) eingliederbar ist.

6. Wasserelektrolysevorrichtung nach Anspruch 6, **dadurch gekennzeichnet, dass** eine Steuer- und Regeleinrichtung vorgesehen ist, welche die Armatur (25) und/oder die Kühlvorrichtung (24) zum Zwecke der Temperaturregelung des dem Ionenaustauscher (11) und/oder dem PEM-Elektrolyseurs (1) zugeführten Wassers ansteuert.

7. Wasserelektrolysevorrichtung nach Anspruch 5 oder 6, **dadurch gekennzeichnet, dass** die Armatur (25) ein Mischventil ist.

8. Wasserelektrolysevorrichtung nach Anspruch 6 oder 7, **dadurch gekennzeichnet, dass** im Wärmeträgerkreislauf (20) eine drehzahlsteuerbare Umwälzpumpe (21) angeordnet ist, deren Drehzahl von der Steuer- und Regeleinrichtung gesteuert ist.

9. Wasserelektrolysevorrichtung nach einem der vorhergehenden Ansprüche, **dadurch gekennzeichnet, dass** die Kühlvorrichtung (24) im Wärmeträgerkreislauf (20) parallel zum weiteren Wärmetauscher (12)oder in Durchströmungsrichtung vor dem ersten Wärmetauscher (12) mit diesem in Reihe geschaltet ist.

10. Wasserelektrolysevorrichtung nach einem der vorhergehenden Ansprüche, **dadurch gekennzeichnet, dass** zwischen dem Ausgang des weiteren Wärmetauschers (12) und dem Eingang des PEM-Elektrolyseurs (1) eine Heizvorrichtung (16) im Leitungskreislauf (4) eingegliedert ist oder dass dem weiteren Wärmetauscher (12) im Wärmeträgerkreislauf (20) eine Heizvorrichtung (16) vorgeschaltet ist.

11. Wasserelektrolysevorrichtung nach einem der vorhergehenden Ansprüche, **dadurch gekennzeichnet, dass** im Leitungskreislauf (4) parallel zum PEM-Elektrolyseur (1) eine Bypassleitung (14) vorgesehen ist, die mittels eines Ventils (13) absperrbar ist.

12. Wasserelektrolysevorrichtung nach einem der vorhergehenden Ansprüche, **dadurch gekennzeichnet, dass** dem PEM-Elektrolyseur (1) eine Ventilanordnung (17, 18) zur Richtungsumkehr der Durchströmung zugeordnet ist.

13. Wasserelektrolysevorrichtung nach Anspruch 12, **dadurch gekennzeichnet, dass** Ein- und Ausgang (2, 3) des PEM-Elektrolyseurs (1) jeweils über ein 3/2-Wegeventil (17, 18) mit der zuführenden und abführenden Leitung (15, 5) des Leitungskreislaufes (4) verbunden sind.

14. Wasserelektrolysevorrichtung nach Anspruch 12, **dadurch gekennzeichnet, dass** Ein- und Ausgang (2, 3) des PEM-Elektrolyseurs (1) über ein 4/2-Wegeventil, vorzugsweise über ein 4/3-Wegeventil mit der zuführenden und abführenden Leitung (15, 5) des Leitungskreislaufes (4) verbunden sind.

15. Wasserelektrolysevorrichtung nach einem der vorhergehenden Ansprüche, **dadurch gekennzeichnet, dass** eine Anfahrsteuerung vorgesehen ist, welche während der Anfahrphase den Leitungskreislauf (4) durch einen Bypass (14) unter Umgehung des PEM-Elektrolyseur führt.

16. Wasserelektrolysevorrichtung nach einem der vorhergehenden Ansprüche, **dadurch gekennzeichnet, dass** eine Umkehrsteuerung vorgesehen ist, welche in zeitlichen Abständen die dem PEM-Elektrolyseur (1) zugeordneten Ventile (17, 18) umsteuert.

## Claims

1. A method for operating a water electrolysis device for producing hydrogen and oxygen, in which in a water circuit (4), water which comes from a PEM electrolyser (1) is fed to a first heat exchanger (10) for cooling, subsequently to an ion exchanger (11), then to a second heat exchanger (12) for heating and again to the PEM electrolyser (1), **characterised in that** the heat exchangers (10, 12) form part of a common heat transfer medium circuit (20) at the secondary side, that the heat transfer medium circuit (20) comprises a cooling device (24), through which the heat transfer medium flow is selectively led in a complete or partial manner or not at all, for the control and/or regulation of the temperature of the water which is fed to the ion exchanger (11) and/or to the PEM electrolyser (1).

2. A method according to claim 1, in which a PEM electrolyser (1) is applied, **characterised in that** the flow direction through the PEM electrolyser (1) is periodically reversed, preferably in each case after shutting down the electrolysis device.

3. A method according to claim 1 or 2, **characterised in that** on starting up the water electrolysis device, the water circuit (4) is led past the PEM electrolyser (1) via a bypass conduit (14).

4. A method according to one of the preceding claims, **characterised in that** on starting up the water electrolysis device, the water which is fed to the PEM electrolyser (1) is preheated by way of a heating device (16).

5. A water electrolysis device for producing hydrogen and oxygen from water, in which a PEM electrolyser (1), a first heat exchanger (10), an ion exchanger (11) and a further heat exchanger (12) whose exit is conductively connected to the PEM electrolyser (1) are successively arranged in a conduit circuit (4), **characterised in that** the heat exchangers (10, 12) are integrated into a common heat transfer medium circuit (20) at the secondary side, and that a cooling device (24) which is preferably controllable with regard to the cooling power and which can be integrated into the heat transfer medium circuit (20) via a controllable fitting (25) is assigned to the heat transfer medium circuit (20).

6. A water electrolysis device according to claim 6, **characterised in that** a control and regulation device is provided, said control and regulation device activating the fitting (25) and/or the cooling device (24) for the purpose of temperature regulation of the water which is fed to the ion exchanger (11) and/or to the PEM electrolyser (1).

7. A water electrolysis device according to claim 5 or 6, **characterised in that** the fitting (25) is a mixing valve.

8. A water electrolysis device according to claim 6 or 7, **characterised in that** a speed-controllable circulation pump (21) whose speed is controlled by the control and regulation device is arranged in the heat transfer medium circuit (20).

9. A water electrolysis device according to one of the preceding claims, **characterised in that** the cooling device (24) in the heat transfer medium circuit (20) is connected parallel to the further heat exchanger (12) or is connected in series to the first heat exchanger (12) upstream of this in the throughflow direction.

10. A water electrolysis device according to one of the preceding claims, **characterised in that** a heating device (16) is integrated in the conduit circuit (4) between the exit of the further heat exchanger (12) and the entry of the PEM electrolyser (1), or that a heating device (16) is connected upstream of the further heat exchanger (12) in the heat transfer medium circuit (20).

11. A water electrolysis device according to one of the preceding claims, **characterised in that** a bypass conduit (14) which can be shut-off by way of a valve (13) is provided in the conduit circuit (4) parallel to the PEM electrolyser (1).

12. A water electrolysis device according to one of the preceding claims, **characterised in that** a valve arrangement (17, 18) for the direction reversal of the throughflow is assigned to the PEM electrolyser (1).

13. A water electrolysis device according to claim 12, **characterised in that** the entry and exit (2, 3) of the PEM electrolyser (1) are each connected to the feeding and discharging conduit (15, 5) of the conduit circuit (4) via a 3/2-way valve (17, 18).

14. A water electrolysis device according to claim 12, **characterised in that** the entry and exit (2, 3) of the PEM electrolyser (1) are connected to the feeding and discharging conduit (15, 5) of the conduit circuit (4) via a 4/2-way valve, preferably via a 4/3-way valve.

15. A water electrolysis device according to one of the preceding claims, **characterised in that** a start-up control is provided, said start-up control leading the conduit circuit (4) through a bypass (14) whilst bypassing the PEM electrolyser during the start-up phase.

16. A water electrolysis device according to one of the preceding claims, **characterised in that** a reversal control is provided, this rerouting the valves (17, 18) which are assigned to the PEM electrolyser (1), in temporal intervals.

## Revendications

1. Procédé pour faire fonctionner un dispositif d'électrolyse de l'eau afin de produire de l'hydrogène et de l'oxygène, dans lequel dans un circuit d'eau (4), de l'eau provenant d'un dispositif d'électrolyse PEM (1) est acheminée vers un premier échangeur de chaleur (10) destiné à un refroidissement, ensuite vers un échangeur d'ions (11), puis vers un second échangeur de chaleur (12) destiné à un chauffage, et de nouveau vers le dispositif d'électrolyse PEM (1), **caractérisé en ce que** les échangeurs de chaleur (10, 12) font partie d'un circuit de fluide caloporteur (20) commun sur le côté secondaire, **en ce que** le circuit de fluide caloporteur (20) comprend un dispositif de refroidissement (24) que le fluide caloporteur traverse complètement, partiellement ou pas du tout afin de commander et/ou de réguler la température de l'eau acheminée vers l'échangeur d'ions (11) et/ou le dispositif d'électrolyse PEM (1).

2. Procédé selon la revendication 1, selon lequel un dispositif d'électrolyse PEM (1) est utilisé, **caractérisé en ce que** la direction de passage du flux passant par le dispositif d'électrolyse PEM (1) est inversée périodiquement, de manière préférée après chaque arrêt du dispositif d'électrolyse.

3. Procédé selon la revendication 1 ou 2, **caractérisé en ce que** lors du démarrage du dispositif d'électrolyse de l'eau, le circuit d'eau (4) est guidé devant le dispositif d'électrolyse PEM (1) par l'intermédiaire d'une conduite de dérivation (14).

4. Procédé selon l'une des revendications précédentes, **caractérisé en ce que** lors du démarrage du dispositif d'électrolyse de l'eau, l'eau alimentant le dispositif d'électrolyse PEM (1) est préchauffée au moyen d'un dispositif de chauffage (16).

5. Dispositif d'électrolyse de l'eau pour produire de l'hydrogène et de l'oxygène à partir d'eau, dans lequel un dispositif d'électrolyse PEM (1), un premier échangeur de chaleur (10), un échangeur d'ions (11) et un échangeur de chaleur supplémentaire (12) dont la sortie est reliée par une conduite au dispositif d'électrolyse PEM (1), sont agencés de manière successive au sein d'un circuit de conduite (4), **caractérisé en ce que** les échangeurs de chaleur (10, 12) sont intégrés dans un circuit de fluide caloporteur (20) commun sur le côté secondaire, et **en ce qu'**un dispositif de refroidissement (24), pouvant de manière préférée être commandé en fonction de la capacité de refroidissement et pouvant être intégré dans le circuit de fluide caloporteur (20) par l'intermédiaire d'un appareillage (25) pouvant être commandé, est associé au circuit de fluide caloporteur.

6. Dispositif d'électrolyse de l'eau selon la revendication 6, **caractérisé en ce qu'**un dispositif de commande et de régulation est prévu, qui commande l'appareillage (25) et/ou le dispositif de refroidissement (24) afin de réguler la température de l'eau acheminée vers l'échangeur d'ions (11) et/ou vers le dispositif d'électrolyse PEM (1).

7. Dispositif d'électrolyse de l'eau selon la revendication 5 ou 6, **caractérisé en ce que** l'appareillage (25) est une vanne de mélange.

8. Dispositif d'électrolyse de l'eau selon la revendication 6 ou 7, **caractérisé en ce qu'**une pompe de recirculation (21) à commande de régime, dont le régime est commandé par le dispositif de commande et régulation, est agencée au sein du circuit de fluide caloporteur (20).

9. Dispositif d'électrolyse de l'eau selon l'une quelconque des revendications précédentes, **caractérisé en ce que** le dispositif de refroidissement (24) est monté au sein du circuit de fluide caloporteur (20) parallèlement à l'échangeur de chaleur supplémentaire (12) ou est monté en série avec le premier échangeur de chaleur (12) en amont de celui-ci dans la direction de passage du flux.

10. Dispositif d'électrolyse de l'eau selon l'une quelconque des revendications précédentes, **caractérisé en ce qu'**un dispositif de chauffage (16) est intégré dans le circuit de conduite (4) entre la sortie de l'échangeur de chaleur supplémentaire (12) et l'entrée du dispositif d'électrolyse PEM (1) ou **en ce qu'**un dispositif de chauffage (16) est monté en amont de l'échangeur de chaleur supplémentaire (12) dans le circuit de fluide caloporteur (20).

11. Dispositif d'électrolyse de l'eau selon l'une quelconque des revendications précédentes, **caractérisé en ce qu'**une conduite de dérivation (14), qui peut être bloquée au moyen d'un clapet (13), est prévue dans le circuit de conduite (4) parallèlement au dispositif d'électrolyse PEM (1).

12. Dispositif d'électrolyse de l'eau selon l'une quelconque des revendications précédentes, **caractérisé en ce qu'**un agencement de vannes (17, 18) destiné à l'inversion de la direction de passage du flux est associé au dispositif d'électrolyse PEM (1).

13. Dispositif d'électrolyse de l'eau selon la revendication 12, **caractérisé en ce que** l'entrée et la sortie (2, 3) du dispositif d'électrolyse PEM (1) sont reliées respectivement à la conduite d'acheminement et de décharge (15, 5) du circuit de conduite (4) par l'intermédiaire d'une vanne à 3/2 voies (17, 18).

14. Dispositif d'électrolyse de l'eau selon la revendication 12, **caractérisé en ce que** l'entrée et la sortie (2, 3) du dispositif d'électrolyse PEM (1) sont reliées à la conduite d'alimentation et de décharge (15, 5) du circuit de conduite (4) par l'intermédiaire d'une vanne à 4/2 voies, de manière préférée par l'intermédiaire d'une vanne à 4/3 voies.

15. Dispositif d'électrolyse de l'eau selon l'une quelconque des revendications précédentes, **caractérisé en ce qu'**une commande de démarrage est prévue, qui fait passer le circuit de conduite (4) par une conduite de dérivation (14) en évitant le dispositif d'électrolyse PEM (1) pendant la phase de démarrage.

16. Dispositif d'électrolyse de l'eau selon l'une quelconque des revendications précédentes, **caractérisé en ce qu'**une commande d'inversion est prévue, qui inverse à des intervalles de temps les vannes (17, 18) associées au dispositif d'électrolyse PEM (1).
